(19) Europäisches Patentamt
European Patent Office
Office européen des brevets

(11) EP 3 029 201 A2

(12) EUROPEAN PATENT APPLICATION

(43) Date of publication:
08.06.2016 Bulletin 2016/23

(51) Int Cl.:
E01F 9/559 (2016.01)  G08G 1/02 (2006.01)

(21) Application number: 15202180.4

(22) Date of filing: 03.03.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 09.03.2010  GB 201003908

(62) Document number(s) of the earlier application(s) in
accordance with Art. 76 EPC:
11709761.8 / 2 545 220

(71) Applicant: Clearview Traffic Group Limited
Bicester, Oxfordshire OX26 4LD (GB)

(72) Inventor: Dicks, Martin
Hastings, East Sussex TN34 2AR (GB)

(74) Representative: Boult Wade Tennant
Verulam Gardens
70 Gray's Inn Road
London WC1X 8BT (GB)

Remarks:
This application was filed on 22-12-2015 as a
divisional application to the application mentioned
under INID code 62.

(54) **IMPROVED ROAD STUDS**

(57)    At night time vehicles have their headlights and rear lights switched on. Similarly, vehicle lights are generally switched on in periods of poor daytime visibility. The present invention uses the light emitted by vehicles to provide enhanced functionality to road studs. For example, there is described a road stud for disposal in the road surface. The road stud comprises a light sensor, a microprocessor and a light source. The light sensor is operable to sense incoming light from a vehicle on the road surface and to output associated sense light data. The microprocessor is operable to analyse the sensed light data, thereby enabling the detection of vehicles with their lights on. The light source is arranged to emit light from the road stud. The microprocessor is operable to reduce the power drawn by the light source when no vehicles with their lights on have been detected for a predetermined period of time.

FIG. 1

**Description**

FIELD OF THE INVENTION

The present invention relates to road studs for disposal in a road surface.

BACKGROUND OF THE INVENTION

Road studs may be embedded in a road surface to clearly delineate lanes on the road during darkness. Road studs may generally be classed as "active" or "passive".

Passive road studs, or cat's eyes, simply provide a reflective function so as to reflect a vehicle's headlights back to the vehicle's driver. No power is required by passive road studs, but only a few such road studs are visible on the road ahead due to the requirement for a vehicle's headlights to fall upon each road stud for it to be visible to a driver.

In contrast, active road studs incorporate LEDs, for example, which act as a light source for drivers even in the absence of a vehicle's direct headlights on the road stud. Thus, active road studs can delineate road lanes much further ahead of a vehicle than is possible using passive road studs. Nonetheless, a power source is required to power the LEDs in active road studs. For example, active road studs may be internally-powered (e.g. solar-powered) or externally powered (e.g. hard-wired).

It would be desirable for internally-powered, active road studs to be able to operate during periods of poor daytime visibility, as well as at night time. However, a number of factors make this difficult to achieve, not least the power availability within the road stud: a number of days of poor daytime visibility might draw a considerable amount of power from the road stud, potentially leading to the road stud being non-operational at night time, which would clearly be undesirable.

It would also be desirable to provide enhanced functionality to road studs, including vehicle detection, measurement of vehicle speed, monitoring visibility, monitoring the condition of the road surface, vehicle type identification, and the detection of rain and fog.

It would also be desirable to provide methods of reducing the power consumption by active road studs, particularly those that are internally-powered.

It would also be desirable to provide an improved retro-reflector suitable for use in a flush road stud.

The present invention seeks to provide road studs and associated methods which are particularly suited to use in conditions of poor daytime visibility as well as at night time.

SUMMARY OF THE INVENTION

At night time vehicles have their headlights and rear lights switched on. Similarly, vehicle lights are generally switched on in periods of poor daytime visibility.

The present invention uses the light emitted by vehicles to provide enhanced functionality to road studs, as described below.

According to a first aspect of the present invention, there is provided a road stud for disposal in a road surface. The road stud comprises an optical input, an optical output, a light modification component, and a microprocessor. The optical input is for receiving incoming light from a vehicle on the road surface. The optical output is for directing light out of the road stud in a predetermined output direction. The light modification component is operable to modify incoming light as it passes along a light path from the optical input to the optical output. The microprocessor is operable to control the light modification component, thereby enabling the road stud to send an outgoing optical communication signal in the predetermined output direction when the road stud is illuminated by incoming light from a vehicle.

Thus, this aspect of the invention enables outward optical communication from road studs by making use of the light from passing vehicles (e.g. headlights). Thus, the incoming light signal need only be modified to provide an outgoing communication signal, which ensures that the power requirements for such communication is very low, such that this communication method may be used by internally-powered road studs (e.g. solar road studs) without drawing significant amounts of power away from the primary illumination function of such road studs.

In an advantageous embodiment, the light modification component is an interrupt component operable to alternately prevent and allow the passage of incoming light along the light path from the optical input to the optical output, thereby enabling the road stud to send a digital optical communication signal in the predetermined output direction. The sending of digital "on/off" type communication signals is advantageous as it makes the signals more robust to decoding at the other end (i.e. there is more difference between a full signal and no signal than there is between a full signal and a part signal, so there is less chance of decoding errors. More advantageously, the interrupt component comprises a piezoelectric element coupled to an optical element disposed in the light path. The piezoelectric element is operable to move the optical element in response to electrical signals from the microprocessor. The optical element is moveable to alternately prevent and allow the passage of incoming light along the light path from the optical input to the optical output. This embodiment provides a particularly efficient and effective way of implementing the invention.

In an advantageous embodiment, the road stud further comprises a light sensor arranged to sense an incoming optical communication signal. This enables the road stud to receive as well as send optical communication signals. More advantageously, the road stud is arranged to receive the incoming optical communication signal from a predetermined input direction. Still more advantageously, the predetermined input direction is substantially coincident with the predetermined output direction. This enables two-way optical communication between two such road studs disposed at spaced locations in the road surface.

In an advantageous embodiment, the road stud comprises a plurality of optical inputs for receiving incoming light from vehicles on the road surface. For example, the road stud may have one optical input pointing along the road towards vehicles travelling in one direction, and one optical input pointing along the road towards vehicles travelling in the other direction. Thus, it becomes possible for the road stud to differentiate between vehicles moving in the two directions, and such information may be included in the optical communication signal if desired.

In an advantageous embodiment, the road stud comprises a plurality of optical outputs for directing light out of the road stud in a plurality of respective predetermined output directions. For example, the road stud may have one optical output directed towards an adjacent road stud in one direction along the road, and one optical input directed towards an adjacent road stud in the other direction along the road. Thus, the road stud may send optical communications signals in either direction along the road. It would also be possible for the road stud to have an optical output pointing towards a roadside data collection box with the capacity to store more information than the road stud itself.

According to a second aspect of the present invention, there is provided a road stud for disposal in a road surface. The road stud comprises a light sensor and a microprocessor. The light sensor is operable to sense incoming light from a vehicle on the road surface and to output associated sensed light data. The microprocessor is operable to analyse the sensed light data, thereby enabling the detection of vehicles with their lights on.

Thus, this aspect of the invention enables a road stud to sense when a vehicle with its lights on is nearby, which means that the road stud may have different modes of behaviour in the presence/absence of nearby vehicles.

In an advantageous embodiment, the road stud further comprising a light source arranged to emit light from the road stud for viewing by a vehicle driver. In this case, the microprocessor is operable to reduce the power drawn by the light source when no vehicles with their lights on have been detected for a predetermined period of time. This reduces the average power consumption by the light source, which is particularly useful for self-powered road studs (e.g. solar road studs) which have a limited power supply. For example, the microprocessor may be operable to reduce the power drawn by the light source by reducing the intensity of light emitted by the light source. Alternatively or additionally, the microprocessor may be operable to reduce the power drawn by the light source by reducing the frequency of light emitted by the light source.

In an advantageous embodiment, the microprocessor is operable to detect a vehicle with its lights on when the sensed light data comprises a high-frequency oscillating signal. The high-frequency oscillating signal is associated with vibration of the vehicle, which makes it possible to discern vehicle light signals from other light signals (e.g. the sun, street lights, building lighting, torches, etc.).

According to a third aspect of the present invention, there is provided a road stud for disposal in a road surface. The road stud comprises a reflector, a light source, a light sensor, and a microprocessor. The reflector is for reflecting incoming light from a vehicle on the road surface. The light source is arranged to emit light from the road stud. The light sensor is for sensing light so as to provide sensed light data. The microprocessor is operable to adjust the light emitted by the light source based on the sensed light data so as to control a property of the combined reflected and emitted outgoing light from the road stud.

Thus, this aspect of the invention enables the overall light output from a road stud (i.e. combined reflected and emitted light) to be controlled. Hence, it is possible to provide a constant light output from a road stud, regardless of whether or not there is reflected light in addition to the emitted light.

In an advantageous embodiment, the light sensor is arranged to sense a light colour, and the light source is a colour-variable light source. In this case, the microprocessor is operable to adjust the colour of light emitted by the colour-variable light source based on the sensed light colour so as to control the colour of the combined reflected and emitted outgoing light from the road stud. Thus, the road stud is able to provide an overall light output with a constant colour regardless of whether the light output includes reflected light from blue vehicle headlights or yellow vehicle headlights, or no vehicle headlights.

In an advantageous embodiment, the light sensor is arranged to sense an amount of incoming light from a vehicle on the road surface. In this case, the microprocessor is operable to adjust the amount of light emitted by the light source based on the sensed amount of incoming light so as to control the amount of the combined reflected and emitted outgoing light from the road stud. Thus a constant level of light output may be provided by the road stud regardless of whether or not the light output includes reflected light from vehicle headlights in addition to the normal light emitted by the light source.

According to a fourth aspect of the present invention, there is provided a road stud for disposal in a road surface. The road stud comprises a lens, an optical input and a light sensor. The lens has a surface which defines an interface between the lens and an external environment of the road stud. The optical input is arranged to receive incoming light from a vehicle on the road surface. The optical input is arranged to direct the incoming light through the lens along a predetermined path towards the lens surface so as to be reflected and/or refracted by the lens surface. The light sensor is arranged to sense light which has been reflected and/or refracted by the lens surface. The light sensor is operable to output sensed light data so as to provide information about the refractive index of the external environment, thereby enabling inference of information about the moisture content of the external environment.

Thus, this aspect of the invention allows a road stud to obtain information about the moisture content of the external atmosphere using the light from vehicle headlights.

In an advantageous embodiment, the sensed light data includes information about the location of the sensed light. The location of the sensed light is related to whether the light has been reflected or refracted, and the angle of refraction. Thus, this embodiment enables sensed reflected light to be distinguished from sensed refracted light, for example. This embodiment also enables the angle of refraction to be deduced, which provides extra information about the refractive index of the atmosphere and the associated moisture content.

In an advantageous embodiment, the light sensor is arranged to sense light which has been reflected by the lens surface, and the predetermined path is at a predetermined angle ($\theta_1$) to the normal to the lens surface. The predetermined angle is equal to the critical angle ($\theta_c$) for a chosen threshold level of refractive index of the external environment. This enables the road stud to easily detect changes in moisture content across the threshold value since there will either be total internal reflection (i.e. lots of reflected light) or some reflection and some refraction (i.e. less reflected light).

In an advantageous embodiment, the lens surface comprises a curved portion spaced from the predetermined path. The curved portion is arranged such that incoming light refracted along the lens surface is deflected by the curved portion so as to be sensed by the reflected light sensor. Thus, the sensed light data includes information about the angle of refraction, thereby providing additional detail regarding the moisture content of the external atmosphere.

In an advantageous embodiment, the road stud further comprises a lens portion arranged to receive incoming light refracted into the external environment by the lens surface. The lens portion is arranged such that received refracted light is deflected by the lens portion so as to be sensed by the light sensor. Thus, the sensed light data provides information about the angle of refraction, thereby providing additional detail regarding the moisture content of the external atmosphere. More advantageously, the lens portion forms part of the lens. This provides a simple and effective implementation.

In an advantageous embodiment, the road stud further comprises a microprocessor operable to analyse the sensed light data so as to provide information about the refractive index of the environment external to the road stud and so as to infer information about the moisture content of the atmosphere external to the road stud.

In an advantageous embodiment, the road stud further comprises an incoming light sensor arranged to sense incoming light directed along the predetermined path and to output sensed incoming light data. More advantageously, the microprocessor is operable to analyse both the sensed light data and the sensed incoming light data so as to provide information about the refractive index of the environment external to the road stud and so as to infer information about the moisture content of the atmosphere external to the road stud. Thus, the sensed light data may be normalised with respect to the sensed incoming light data so as to provide more accurate inference of the moisture content.

According to a fifth aspect of the present invention, there is provided a road stud for disposal in a road surface. The road stud comprises a first corner cube reflector and a second corner cube reflector. The first corner cube reflector comprises three mutually perpendicular flat surfaces arranged to reflect incoming light back in the incoming light direction, the surfaces being reflective on both sides. The second corner cube reflector comprises three mutually perpendicular flat surfaces, and an aperture at the corner intersection of the three surfaces. The first corner cube reflector is smaller than the second corner cube reflector. The first corner cube reflector is disposed within the second corner cube reflector, spaced in front of the aperture of the second corner cube reflector such that part of the incoming light is reflected back in the incoming light direction and the remainder of the incoming light is reflected between the first and second corner cube reflectors until it passes through the aperture of the second corner cube reflector.

Thus, this aspect of the invention provides a modified corner cube retro-reflector which allows part of the light to be reflected back in the incoming direction, and part of the light to be transmitted through the reflector.

In an advantageous embodiment, the road stud further comprises a light source arranged to emit light through the aperture of the second corner cube reflector. Thus, reflected and emitted light may be easily combined to form effectively a single light source visible to road users.

In an advantageous embodiment, the road stud further comprises a photovoltaic cell arranged to be charged by light passing through the aperture of the second corner cube reflector. Thus, part of any incoming light from vehicle headlights may be used to charge the photovoltaic cell. This may be in addition to charging of such a cell by sunlight.

In an advantageous embodiment, the road stud further comprises a light sensor arranged to sense light passing through the aperture of the second corner cube reflector. Thus, part of the vehicle headlights may be reflected back to the vehicle driver, and part of the vehicle headlights may be used for vehicle detection purposes.

According to a sixth aspect of the present invention, there is provided a road stud for disposal substantially flush with a road surface. The road stud comprises a reflector arranged to reflect incoming light back in the incoming light direction. The reflector comprises a biconvex lens having first and second convex surfaces. The first convex surface of the lens is arranged to receive incoming light from a vehicle on the road surface and to focus the incoming light towards the second convex surface of the lens. The second convex surface is arranged to reflect the incoming light back towards the first convex surface and back out through the lens in the incoming light direction.

Thus, this aspect of the invention provides a new design of retro-reflector suitable for use in a flush road stud.

In an advantageous embodiment, the second convex surface of the lens comprises a reflective coating.

In one advantageous embodiment, any of the light sensors mentioned above may comprise one of a photodiode, a phototransistor, a photoresistor, and a solar/photovoltaic cell.

In one advantageous embodiment, any of the light sources mentioned above may comprise one or more light emitting diodes.

In one advantageous embodiment, any of the road studs mentioned above may further comprise a power supply (e.g. battery/photovoltaic cell for powering the microprocessor, etc.).

In one advantageous embodiment, any of the road studs mentioned above may further comprise a data storage device (e.g. a memory).

Corresponding methods are also envisaged within the scope of the invention.

Other preferred features of the present invention are set out in the appended claims.

BRIEF DESCRIPTION OF THE DRAWINGS

Embodiments of the present invention will now be described by way of example with reference to the accompanying drawings in which:

Figure 1 schematically illustrates a road stud in accordance with an embodiment of the present invention;

Figure 2 is a graph illustrating the headlight intensity of a passing car, as measured by a road stud in the road surface;

Figure 3 is a cross-sectional schematic illustration of a corner cube retro-reflector used in one embodiment of the present invention;

Figure 4 is a cross-sectional schematic illustration of a bi-convex lens retro-reflector used in one embodiment of the present invention;

Figure 5 is a schematic illustration of an optical communication system within the road stud;

Figure 6 shows a car travelling along a road surface towards two road studs embedded in the road surface;

Figure 7 shows the headlight intensity profiles as seen by each of the road studs in Figure 6 as the car goes by;

Figure 8 shows a headlight intensity profile as seen by a road stud when there is a pot hole in the road surface near the road stud;

Figure 9 shows a car moving past a road stud embedded in the road surface;

Figure 10 shows the headlight and rearlight intensity profiles as seen by the road stud in Figure 9 as the car goes by;

Figure 11 schematically illustrates a road stud in accordance with an embodiment of the present invention ;

Figure 12 schematically illustrates a lens for use in the road stud;

Figure 13 schematically illustrates the refraction/reflection of air at an interface between two regions of different refractive index in three situations; and

Figure 14 schematically illustrates a light sensor for sensing reflected and/or refracted light from the lens of Figure 12.

DETAILED DESCRIPTION OF A PREFERRED EMBODIMENT

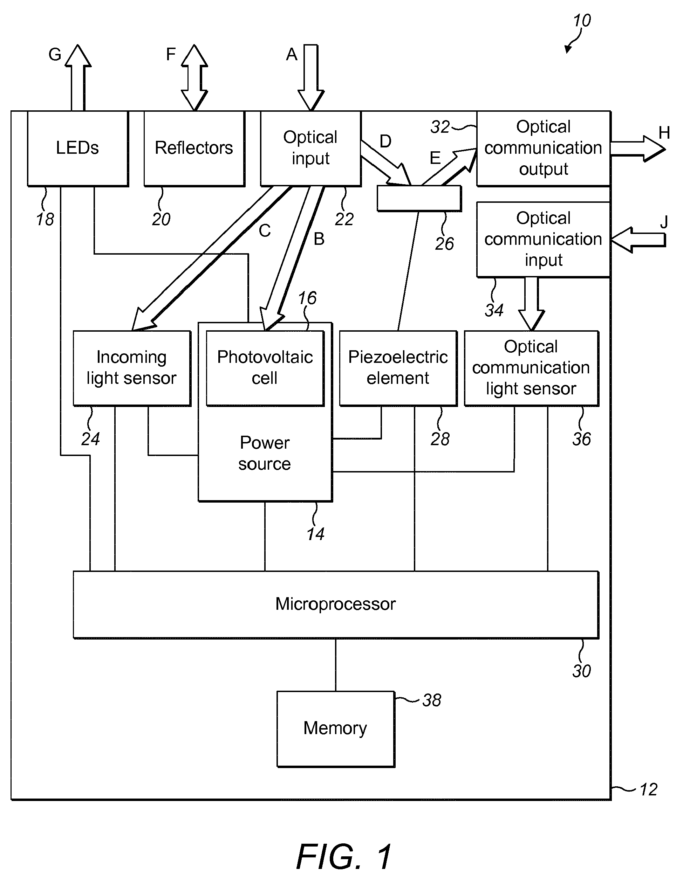

Figure 1 shows a road stud 10. The road stud 10 comprises a housing 12 for disposal in a road surface (not shown). The housing 12 incorporates or encloses various components, such as a power source 14 comprising a solar cell or photovoltaic cell 16, one or more light sources such as LEDs 18, one or more reflectors 20, an optical input 22, an incoming light detection means or light sensor 24, a reflector 26, a piezoelectric element 28, a microprocessor 30, an optical communication output 32, an optical communication input 34, an optical communication light sensor 36 and a data storage device such as memory 38. In Figure 1, all solid arrows schematically illustrate light paths.

The optical input 22 is arranged to receive external light (shown by arrow A) such as sunlight, vehicle light, and/or light from other light sources external to the road stud 10. Some of the external light is directed towards the photovoltaic cell 16 of the power source 14, as shown by arrow B, so as to charge the power source 14. The power source 14 is controlled by the microprocessor 30. The microprocessor 30 is powered by the power source 14.

Some of the external light received by the optical input 22 is directed towards the incoming light sensor 24, as shown by arrow C. Thus, the incoming light sensor 24 is arranged to sense incoming external light and to output associated sensed light data to the microprocessor 30. The incoming light sensor 24 may be powered by the power source 14.

Some of the external light received by the optical input 22 is directed towards the reflector 26, as shown by arrow D. The reflector 26 is moveable by means of the piezoelectric element 28 which is controlled by the microprocessor 30. The piezoelectric element 28 may be powered by the power source 14. Thus, using the piezoelectric element 28 and the microprocessor 30, it is possible to control the path of light reflected by the reflector 26, as shown by arrow E. The reflector 26 and associated optical communication components will be described in more detail in the "Optical communication between road studs" section below.

The reflectors 20 are arranged to at least partially reflect incoming external light back in the incoming light direction so that the light returns to its source, as shown by arrow F. Such reflectors 20 may be described as retro-reflectors.

The LEDs 18 are arranged to emit light from the road stud 10, as shown by arrow G. The LEDs 18 are powered by the power source 14 and are controlled by the microprocessor 30.

The memory 38 is coupled to the microprocessor 30 to enable the storage of raw data sent to the microprocessor 30 by internal sensors (e.g. light sensors 24 and 36), or to enable the storage of processed data. x. In other words, the memory 38 is operable to store data that has been sensed, generated and/or received by the road stud 10.

Optical vehicle detection

The optical input 22 of the road stud 10 is arranged to receive light from vehicles moving along the road surface in which the road stud 10 is placed. The optical input 22 receives light primarily from the headlights of approaching vehicles. Light from vehicle indicators, brake lights and rear lights may also be received by the optical input 22.

As mentioned above, some of the light received by the optical input 22 is directed towards the incoming light sensor 24, as shown by arrow C. The incoming light sensor 24 may include a photodiode, a phototransistor, a photoresistor, or a photovoltaic cell, for example. The incoming light sensor 24 is able to output sensed light data to the microprocessor 30. The microprocessor 30 processes the sensed light data so as to identify vehicle headlights.

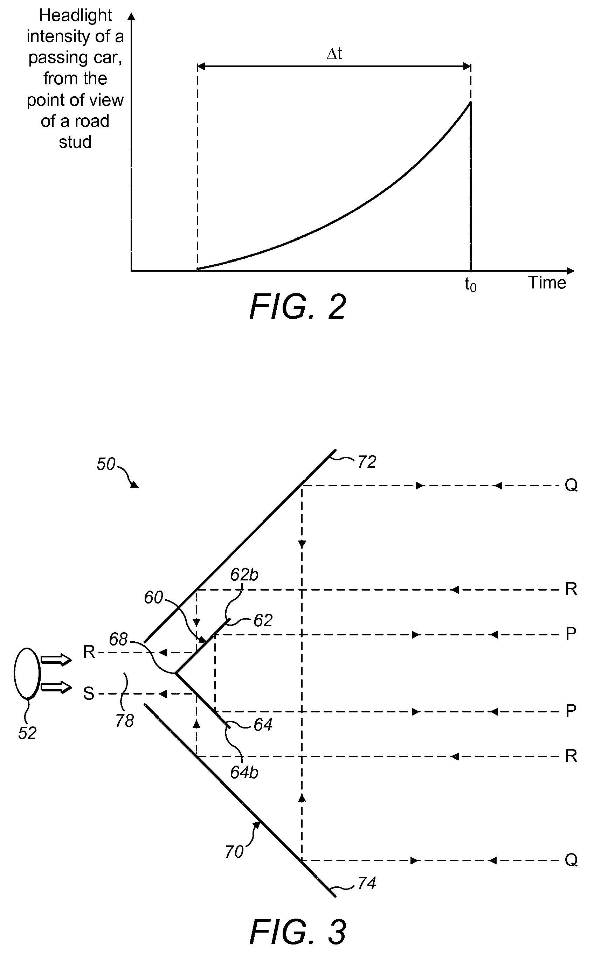

The microprocessor 30 processing may take into to account factors such as the colour and intensity of the sensed light. In addition, the processing may take into account the variation of the sensed light data over time. For example, in cases of moving traffic, the intensity of the sensed light signal from vehicle headlights would tend to increase steadily over time to a maximum, and then to drop off sharply once the front of the vehicle has passed beyond the road stud, as shown in Figure 2. Also, vehicle headlights tend to exhibit "ringing" whereby the light signal includes a high frequency oscillation due to vibrations of the vehicle. The microprocessor 30 therefore includes processing algorithms suitable for identifying vehicles based on the sensed light data from the incoming light sensor 24. Having identified a vehicle, the microprocessor 30 may save vehicle detection data in the memory 38, or may use the vehicle detection data to trigger other functionality within the road stud 10.

Thus, the road stud 10 enables the headlights from approaching vehicles to be monitored, thereby enabling the detection of vehicles with their lights on. It should be noted that the detection of vehicles with their lights on would generally be indicative of night time conditions or poor daytime visibility. Thus, if the road stud 10 includes a clock (not shown), the microprocessor is able to distinguish night time headlight usage from daytime headlight usage, thereby enabling the identification of periods of poor daytime visibility.

At night, the LEDs 18 are usually used to emit light from the road stud 10 so as to illuminate the road stud 10, thereby enabling a number of road studs to clearly delineate road lanes in the dark. However, using the vehicle detection data described above, it would be possible to reduce the power drawn by the LEDs during the hours of darkness when no vehicles have been detected for a given period of time. This reduction in power consumption by the LEDs could be effected by a reduction of say 30-40% in the intensity of the light emitted by the LEDs. Alternatively/additionally, the reduction in power consumption by the LEDs could be effected by a reduction in the LED operating frequency (e.g. from a normal operating frequency of around 130Hz to a fixed operating frequency of around 100 Hz). These changes would be controlled by the microprocessor 30. Such changes would not be perceived by the human eye, so the road stud 10 would still be visible to drivers from long distances away. As soon as vehicle headlights are detected again (from up to 200 meters away), the microprocessor would increase the LED power consumption back to the original settings.

During the daytime, the LEDs 18 in a internally-powered road stud would generally tend to be switched off to conserve power. However, the above power-saving measures in the present road stud 10 make it possible to additionally switch on the LEDs 18 in periods of poor daytime visibility. Such periods of poor daytime visibility may be identified by the microprocessor 30 using the vehicle detection data in combination with a clock signal, as described above.

Combining reflected and emitted light

At present, there is no requirement for a reflective element on an active road stud in the UK. Some road studs are available with both active and reflective elements, but the reflective elements tend to be too small to provide much illumination of the road stud to drivers. Thus, at present in the UK, there is very little illumination provided by self-powered active road studs in periods of poor daytime visibility (since, as mentioned above, the active elements of such road studs tend to be switched off during the daytime to conserve energy).

The present road stud 10 uses active LEDs 18 in combination with a considerably larger reflector 20 than is found on currently available active road studs. Thus, there will be times when the reflective element provides a considerable amount of illumination of the road stud 10 to drivers. In such situations, it would be possible to reduce the amount of illumination provided by the LEDs with no degradation in visibility to drivers. Thus, by taking account of reflected light, it is possible to reduce the amount of power used by the LEDs 18 when there is more incoming light to the road stud, in order for the road stud to provide a specified amount of light output.

As described above, the incoming light sensor 24 is arranged to sense an amount of incoming light from a vehicle on the road surface. Thus, the sensed light data sent to the microprocessor 30 includes information about the amount of incoming light (e.g. information regarding brightness, intensity, luminance of incoming light). Based on the received sensed light data, the microprocessor 30 is able to adjust the amount of light emitted by the LEDs 18 so as to control the amount of the combined reflected and emitted outgoing light from the road stud 10. In this sense, the reflectors 20 and LEDs 18 may be considered as a single light source operable to output a constant amount of light to drivers (see arrows F and G in Figure 1). In other words, the reflectors 20 and the LEDs 18 are sufficiently close together that the reflected outgoing light (arrow F) and the emitted outgoing light (arrow G) are together viewed as a single light source by a driver of a vehicle on the road surface.

It is possible that regulations may change with regard to the required colour use of reflectors and active road studs. For example, it may be required that different colours of light be emitted by road studs at different times of the day and night. To combat this change, a similar methodology may be used to control the colour of the light emitted jointly by the LEDs 18 and the reflectors 20 as was described above with regard to controlling the amount of jointly emitted light. Colour control would be necessary depending on the colour of vehicle headlights reflected back to the driver (most headlights are white/yellow, but some headlights are blue).

In order to control the colour of the outgoing light from the road stud 10, the incoming light sensor 24 is arranged to sense a light colour. Thus, the sensed light data sent to the microprocessor 30 includes information about the colour of the incoming light. In order to control the colour of the outgoing light, the LEDs 18 are colour-variable (e.g. RGB LEDs). Based on the received sensed light data, the microprocessor 30 is able to adjust the colour of light emitted by the LEDs 18 so as to control the colour of the combined reflected and emitted outgoing light from the road stud 10.

It will be appreciated that it would be possible to sense the amount and/or colour of the outgoing light from both the LEDs 18 and the reflectors 20 rather than sensing the amount and/or colour of the incoming light. Based on such data, the microprocessor 30 would still be able to use a feedback loop to control the amount and/or colour of the combined reflected and emitted outgoing light from the road stud 10.

## Corner cube retro-reflector

One way of combining reflected and emitted light into effectively a single outgoing light source as described above is to use the modified corner cube reflector 50 shown in Figure 3 in combination with a light source such as LEDs 52.

Corner cube reflectors are known retro-reflectors consisting of three mutually perpendicular, intersecting flat surfaces which reflect light back towards the source, regardless of the direction of incidence. The three intersecting surfaces together form the corner of a cube, which gives the reflector its name.

The modified corner cube reflector 50 shown in Figure 3 includes a small corner cube reflector 60 and a large corner cube reflector 70. The small corner cube reflector is smaller than the large corner cube reflector.

The small corner cube reflector 60 comprises three mutually perpendicular flat surfaces 62, 64 and 66, although it should be noted that only two of the surfaces 62 and 64 are shown in the cross-sectional view of Figure 3. The three mutually perpendicular flat surfaces intersect at a point 68. The three mutually perpendicular flat surfaces 62, 64 and 66 are arranged to reflect incoming light back in the incoming light direction, as shown by exemplary light rays P. The three mutually perpendicular flat surfaces 62, 64 and 66 are reflective on both sides.

The large corner cube reflector 70 comprises another three mutually perpendicular flat surfaces 72, 74 and 76, although again it should be noted that only two of the surfaces 72 and 74 are shown in the cross-sectional view of Figure 3. In contrast to the small corner cube reflector 60, the large corner cube reflector 70 has an aperture 78 where the three mutually perpendicular flat surfaces 72, 74 and 76 would normally meet. The three mutually perpendicular flat surfaces 72, 74 and 76 are arranged to reflect some of the incoming light back in the incoming light direction, as shown by exemplary light rays Q.

The small corner cube reflector 60 is disposed within the large corner cube reflector 70, spaced from the large corner cube reflector 70 such that there is a gap 54 between the rear reflective surfaces 62b, 64b and 66b of the small corner cube reflector 60 and the front reflective surfaces 72, 74 and 76 of the large corner cube reflector 70. The small corner cube reflector 60 is disposed in front of the aperture 78 of the large corner cube reflector 70.

Some light incident on the reflector 50 is reflected back in the incoming light direction by the small and large corner cube reflectors 60 and 70 (see again exemplary light rays P and Q), but the remainder of the incoming light is reflected between the small and large corner cube reflectors 60 and 70 until it passes through the aperture 78 at the back apex of the large corner cube reflector 70. In particular, exemplary light ray R in Figure 3 shows some incoming light incident on one of the reflective surfaces 72 of the large corner cube reflector 70. The light is reflected by the reflective surface 72 towards a back reflective surface 62b of the small corner cube reflector 60. There may be multiple reflections between the reflective surface 72 of the large corner cube reflector 70 and the reflective surface 62b of the large corner cube reflector 60 (although only one pair of reflections in seen for exemplary light ray R in Figure 3) until the light passes out of the back of the reflector 50 via the aperture 78 at the apex of the large corner cube reflector 70. Exemplary light ray S in Figure 3 is similar to exemplary light ray R, but light ray S is reflected between the surfaces 74 and 64b rather than the surfaces 72 and 62b.

Dependent on

(a) the size of the aperture 78;
(b) the size of the small corner cube 60 reflector as compared to the size of the aperture 78; and
(c) the gap 54 between the small and large corner cube reflectors 60 and 70;

it is possible that some light reflected between the front reflective surfaces 72 and 74 of the large corner cube reflector 70 and the back reflective surfaces 62b and 64b of the small corner cube reflector 60 may be reflected back out of the reflector 50 in the incident direction rather than passing through the aperture 78. Nonetheless, some of the incident light will be reflected by the reflector 50 and the remainder of the incident light will pass through the aperture 78.

In addition, factors (a)-(c) above also dictate the number of reflections which are likely to occur between the small and large corner cube reflectors 60 and 70. For example, a small aperture 78 and a small gap 54 in combination with a relatively large small corner cube reflector 60 would result in a large number of reflections between the small and large corner cube reflectors 60 and 70 for light passing through the aperture 78. In contrast a large aperture 78 and a large gap 54 in combination with a relatively small small corner cube reflector 60 would result in a small number of reflections between the small and large corner cube reflectors 60 and 70 for light passing through the aperture 78.

The relative amounts of incoming light which are reflected by the reflector 50 and transmitted through the aperture 78 are also dependent on the geometrical factors (a)-(c) above, as well as on a further factor:

(d) the size of the large corner cube reflector 70 as compared to the size of the small corner cube 60 reflector.

The incoming light which does eventually pass through the aperture 78 may be directed (e.g. by means of a lens, or other optical components) towards a photovoltaic cell and/or a light sensor (not shown in Figure 3). Some of the incoming light may be directed towards a light sensor, such as the incoming light sensor 24 in Figure 1, and then be used to collect incoming light data. Some of the incoming light may be used to charge a photovoltaic cell, such as the photovoltaic cell 16 shown in Figure 1. Thus, as compared to a normal solar road stud, additional light is collected from passing vehicles and directed towards the solar collection device. Circular flexible solar panels may be placed beneath the existing solar panels, with light being directed from both headlights and solar energy onto the panels.

In order to combine the light reflected by the reflector 50 with light emitted by a light source into effectively a single light source for viewing by road users, one or more LEDs 52 may be disposed behind the reflector 50 and arranged to emit light through the aperture 78 of the large corner cube reflector 70. Such emitted light will be reflected between the back surfaces 62b and 64b of the small corner cube reflector 60 and the front surfaces 72 and 74 of the large corner cube reflector until the light is emitted from the reflector 50.

The reflector 50 enables the same element to detect, reflect and emit light. Thus, light output by the reflector will be perceived as a constant output source by road users. Therefore, as described in the previous section, emitted light can be reduced when light from vehicle headlights is present and of enough intensity to meet the product requirements.

If the road stud 10 of Figure 1 incorporates the reflector 50, then the reflectors 20 of Figure 1 may correspond to the small and large corner cube reflectors 60 and 70. Similarly, the LEDs 18 of Figure 1 may correspond to the LEDs 52. Also, the optical input 22 of Figure 1 may correspond to the aperture 78 in the large corner cube reflector 70. Thus, although the LEDs 18, the reflectors 20 and the optical input 22 have been depicted separately in Figure 1, it is possible that these elements could be integrated with one another, to a greater or lesser degree.

The reflector/LED arrangement of Figure 3 is one example of an effective way to combine reflected and emitted light. Many other options are available, such as using fibre optics to direct light from a light source towards a reflector array. Another example would use multiple light collectors having the external appearance of LEDs to collect light and direct it along a light path allowing collected light to be returned along the same path and emitted at the same angle as incoming light. Light from a light source could be combined with the collected light at some point during the light path such that the collected (i.e. reflected) and emitted light together form a single light source for road users.

Bi-convex lens retro-reflector

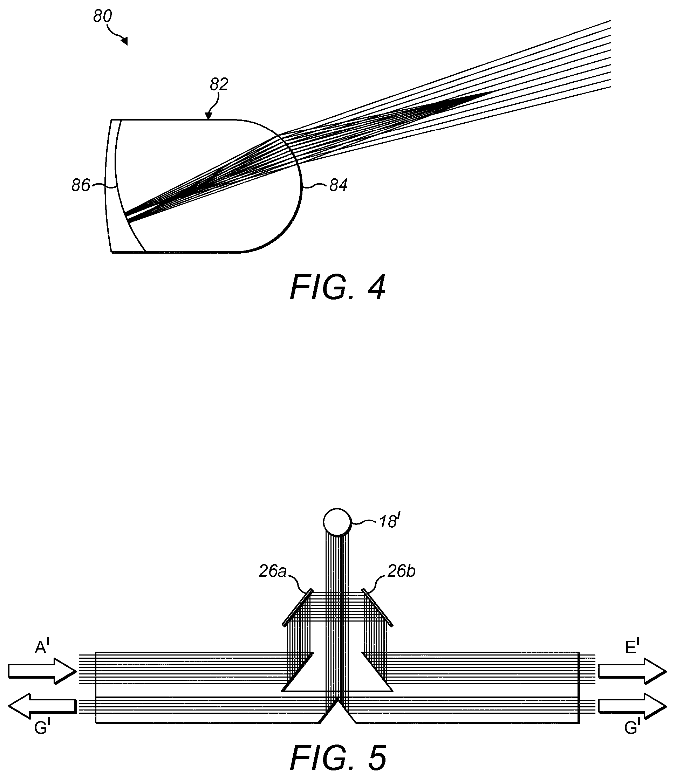

Another new type of road stud reflector is shown in Figure 4. The reflector 80 of Figure 4 is suitable for use in a so-called "flush road stud" which is disposed in a road surface with the top of the road stud being aligned substantially flush with the road surface. The reflector 80 could be used as one or more of the reflectors 20 in the road stud of Figure 1.

The reflector 80 comprises a biconvex lens 82 which has first and second convex surfaces 84 and 86. The first convex surface 84 of the lens 82 may form part of the top surface of the flush road stud. The first convex surface 84 is a transmissive surface arranged to receive incoming light from a vehicle on the road surface. The first convex surface 84 focuses incoming light through the lens 82 towards the second convex surface 86 of the lens 82. The second convex surface 86 is a reflective surface. This could be accomplished by providing a reflective coating on the outside of the lens 82 at the second convex surface 86. The second convex surface 86 reflects incoming light from the first convex surface 84 back towards the first convex surface 84 and back out through the lens 82 in the incoming light direction. Thus, the reflector 80 is a retro-reflector arranged to reflect incoming light back in the incoming light direction.

In practice, the size and focal length, etc. of the first convex surface 84 of the lens 82 may be defined by the existing radius of existing outer road stud lenses. The second convex surface 86 of the lens 82 may be created by placing a larger diameter lens within the road stud at the focal point to create the required reflection.

Optical communication between road studs

Returning to the road stud of Figure 1, as mentioned above, some of the external light received by the optical input 22 is directed towards the reflector 26, as shown by arrow D. The input light may be light which has passed through the aperture 78 in the reflector 50 shown in Figure 3. Alternatively, the optical input 22 may comprise optical components such as lenses, optical fibres, and/or light pipes, etc for receiving the incoming light.

The input light directed towards the reflector 26 is intended to be light from the headlights of a vehicle travelling along the road surface in which the road stud 10 is disposed. Thus, the optical input 22 is oriented to receive light from vehicles on the road surface (e.g. the optical input may be oriented preferentially at a shallow angle along the road surface in the direction of traffic flow). Advantageously, the road stud may comprise two optical inputs 22 arranged to receive light from vehicles travelling in both directions along the road surface: one optical input 22 oriented back towards the last road stud, and one optical input 22 directed forwards towards the next road stud as compared to the direction of travel of a vehicle along the road. This enables the road stud 10 to differentiate between incoming light from the two directions. However, for simplicity, Figure 1 only shows one optical input 22.

The reflector 26 is a planar reflector disposed within the housing 12 of the road stud 10. In the absence of external inputs, the reflector 26 is arranged to reflect incoming light from the optical input 22 (see arrow D) along a light path (see arrow E) towards the optical communication output 32. The optical communication output 32 directs received light (see arrow E) out of the road stud 10 (see arrow H) in a predetermined output direction. The predetermined output direction may be towards an adjacent road stud in the road surface. In this case, the predetermined output direction is likely to be along the road substantially parallel to the road surface. Advantageously, the road stud 10 may comprise two optical communication outputs 32 arranged to send optical communication signals in both directions along the road (i.e. to the adjacent studs in both directions). This enables the road stud 10 to communicate information both up and down the road. Alternatively/additionally, the predetermined output direction may be towards a data collection box disposed at the roadside. However, for simplicity, Figure 1 only shows a single optical communication output 32 with a single predetermined output direction.

Thus, the road stud 10 may direct a portion of any incoming light from vehicle headlights out of the road stud 10 in one or more predetermined output directions. This output light (see arrow H) may be considered as an optical communication signal or an optical data signal from the road stud 10. In the absence of any external forces acting on the reflector 26, the optical communication signal is "on" when there the optical input 22 receives incoming light from vehicle headlights, and the optical communication signal is "off" when there are no vehicles with their headlights on in the vicinity of the road stud 10.

In order to enable a greater amount of information to be communicated out of the road stud 10 via the optical communication signal (see arrow H), it is possible to move the reflector 26 such that it reflects light in a different direction. In other words, it is possible to adjust the orientation of the reflector 26 such that the reflected light, as shown by arrow E in Figure 1, is directed along a different light path which does not lead to the optical communication output 32. Thus, when the reflector 26 has been moved in this manner, no incoming light from vehicle headlights will reach the optical communication output 32, and the optical communication signal will be "off". Back and forth movement of the reflector 26 therefore makes it possible to send a digital (i.e. binary, "on/off", 0 or 1) optical communication signal (see arrow H) from the road stud 10 in the predetermined output direction. In one embodiment, the microprocessor 30 of the road stud 10 may be arranged to send a digital signal pulsing at a frequency of around 38kHz. Moreover, a vehicle travelling at 70mph may be expected to provide a light input to a road stud for a period of around two seconds. Thus, a significant amount of data may be sent to an adjacent road stud during a vehicle passing event.

The reflector 26 is moveable by means of the piezoelectric element 28 which is controlled by the microprocessor 30. In particular, the piezoelectric element moves the reflector 26 in response to electrical signals from the microprocessor 30. Thus, using the piezoelectric element 28 and the microprocessor 30, it is possible to control the path of light reflected by the reflector 26 such that incoming light either is or is not directed towards the optical communication output 32. This enables a digital on/off optical signal (see arrow H) to be sent from optical communication output 32 of the road stud 10 in the predetermined output direction when the road stud is illuminated by incoming light from a vehicle. In this sense, the reflector 26 and the piezoelectric element 28 may be considered as an "interrupter" which interrupts the light passing between the optical input 22 and the optical communication output 32. Thus, this road stud communication method uses the high powered light from passing vehicles and redirects it along a light path to the other side of the road stud 10 via an "interrupter".

Figure 5 schematically illustrates one embodiment of the light paths in and out of the "interrupter" contained within the road stud 10. Figure 5 is symmetric to illustrate the preferred embodiment in which light is received and emitted by the road stud both up and down the road. Thus, the road stud is able to receive light from and emit light to vehicles travelling in both directions along the road. Light from a vehicle's headlights (shown by arrow A') is passed to first and second reflectors 26a and 26b, at least one of which is moveable by an associated piezoelectric element (not shown in Figure 5). If the reflectors 26a and 26b are properly aligned, then a reflected beam of light (see arrow E') may be passed to an optical communication output (not shown in Figure 5) so as to emit an optical communication signal in a predetermined output direction. Also shown in Figure 5 is an LED 18' which emits light in both directions along the road (see arrows G').

It is contemplated that means other than the reflector 26 and the piezoelectric element 28 could be used to digitally modify the incoming light from vehicle headlights as it passes along the light path (see arrows D and E) from the optical input 22 to the optical communications output 32. In addition, rather than using a digital "on/off" type of optical communication signal (see arrow H), it would be possible to modify the strength of the signal in an analogue manner for communication purposes. However, this analogue communication option is less desirable than the digital communication option as it would be more prone to signal decoding errors.

The road stud 10 also includes the optical communication input 34 and the associated optical communication light sensor 36, as shown in Figure 1. The optical communication input 34 is arranged to receive an optical communication signal (see arrow J) emitted by an adjacent road stud. For example, the optical communication input 34 may be oriented and arranged so as to receive an optical signal (see arrow J) deriving from a direction along the road parallel to the road surface. Advantageously, the road stud 10 may comprise two optical communication inputs 34 arranged to receive optical communication signals (see arrow J) from both directions along the road (i.e. from the adjacent studs in both directions). This enables the road stud 10 to differentiate between information received from up and down the road. However, for simplicity, only one optical communication input 34 is shown in Figure 1. Any optical communication signal (see arrow J) received by the optical communication input 34 is sensed by the optical communication light sensor 36 which outputs sensed light data to the microprocessor 30 such that the optical communication signal may be decoded.

Thus, the road studs 10 described herein are capable of two-way communication (i.e. sending and receiving data). A line of such road studs along a road would enable information to be sent along the road in both directions. Information could also be sent off the road to a roadside data collection box at appropriate intervals if required. Since communications are effected optically, a line-of-sight is required between communication road studs 10. This should be feasible in most circumstances since road studs are generally positioned closer together at bends and the like. However, if a line-of-sight is not possible, the communication signal could be sent off-road to a roadside box and then back on-road to the next road stud by means of the roadside box.

The road stud 10 is capable of communicating information only when vehicle headlights are present, and will therefore only function at night and in poor weather conditions. It would be possible to additionally incorporate traditional RF or IR communication technologies. However, such communications technologies use much more power than the optical communication system using vehicle headlights, as described above. Therefore, due to power constraints, IR or RF communications would be used only in exceptional circumstances (e.g. if stationary traffic was present and the information needed to be communicated when headlights were not available).

There are numerous useful applications of a system of communicating road studs, a few of which are described below.

(a) Measuring vehicle speed

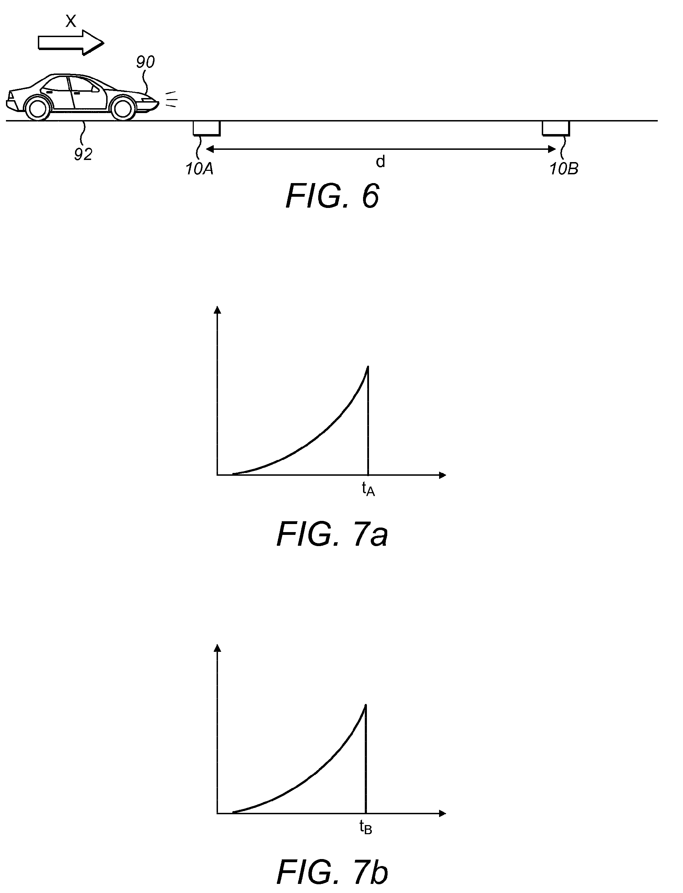

Figure 6 shows a car 90 with its headlights on travelling along a road surface 92 in the direction shown by arrow X. The car 90 is approaching two road studs 10A and 10B disposed in the road surface 92 a distance d apart.

Figures 7a and 7b show the headlight intensity profile detected by the road studs 10A and 10B respectively from the direction of approach of the car 90 (i.e. the -x direction). The maximum headlight intensity is detected at times $t_A$ and $t_A$ just as the front of the car passes over each of the road studs 10A and 10B respectively.

The speed $v$ of the car 90 is simply given by

$$\frac{d}{t_B - t_A}.$$

If each road stud 10A and 10B measures the light profile of the headlights as the car 90 passes by, then the times $t_A$ and $t_A$ may be recorded the road studs 10A and 10B respectively. Thus, the speed $v$ of the car may easily be calculated if the times $t_A$ and $t_A$ are passed between the two road studs 10A and 10B as part of the optical communication signals.

(b) Monitoring visibility

Over an extended period of time, the road stud 10 may record headlight intensity profiles for a large number of passing vehicles. With reference to Figure 2, the period $\Delta t$ over which the vehicle headlights are detected will depend on the vehicle speed. However, given the vehicle speeds (calculated as described above), it is possible to normalise the received headlight intensity profiles with respect to vehicle speed so as to calculate an average headlight intensity profile. The brightness and range of vehicle headlights will vary somewhat from vehicle to vehicle, but given a large enough sample of passing vehicles with their headlights on, the average headlight intensity profile should be relatively stable.

If visibility is reduced (e.g. due to smoke, fog, sandstorm, etc.) then the period $\Delta t$ over which the vehicle headlights are detected will systematically decrease. Vehicle speeds are also likely to decrease in such circumstances. Thus, the road stud 10 may analyse sensed light data to detect extended periods of reduced visibility.

(c) Monitoring the condition of the road surface

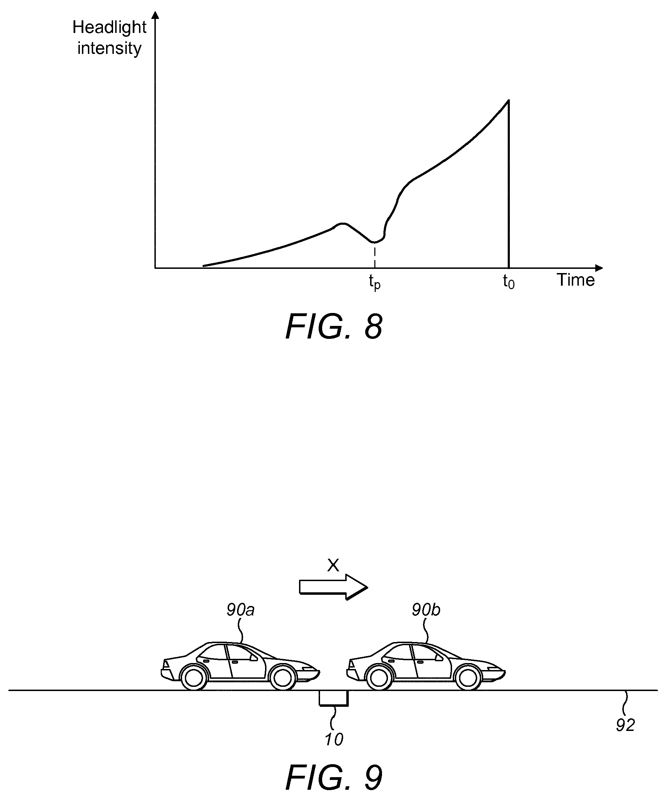

Similarly, there may be a systematic change in the headlight intensity profile if there is a pot hole or similar in the road surface. In this case, the headlight intensity profile may correspond to that shown in Figure 8, with a reduction in headlight intensity being detected at a time $t_p$ prior to the maximum detected intensity at $t_0$. If such a reduction in intensity is systematically detected over a number of vehicle headlight profiles, and if the reduction in intensity always occurs at the same distance from the road stud 10 (i.e. if $v(t_0-t_p)$ is constant, where $v$ is the vehicle speed), then it is reasonable to assume that there is a problem with the road surface (e.g. a pot hole).

In one embodiment, a sample log of the approach information from vehicle headlights can be taken by the road stud 10. This data can be communicated off road and stored. Future information can be compared against the logged data on a daily basis by computer to establish if changes have taken place.

Thus, the road stud 10 may be used to monitor the condition of the road surface.

(d) Vehicle type identification

With vehicle detection in operation within the road stud 10, the existence of passing vehicles can be gained and communicated to the next road stud which logs the information and calculates the speed of the vehicle. Once the vehicle's rear lights have passed the second road stud the vehicle length is calculated and logged and defined as type. This information can be passed along the studs if required and passed off road at an appropriate place.

For example, Figure 9 shows a vehicle 90 is shown with its headlights on travelling along a road surface 92 in the direction shown by arrow X. The vehicle 90 is shown in two positions during its journey.

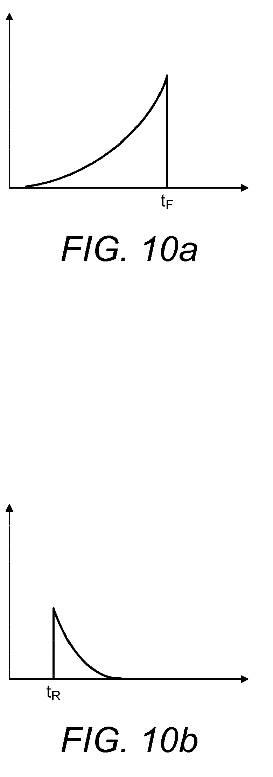

Firstly, the vehicle 90a is shown at a location where the maximum headlight intensity will be detected by the road stud 10. The detected headlight intensity profile is shown in Figure 10a. The road stud 10 may record the time $t_F$ at which the maximum headlight intensity is observed. This occurs just as the front of the vehicle 90a passes over the road stud 10.

Secondly, the vehicle 90b is shown at a location where the maximum rearlight intensity will be detected by the road stud 10. The detected rearlight intensity profile is shown in Figure 10b. The road stud 10 may record the time $t_R$ at which the maximum rearlight intensity is observed. This occurs just as the back of the vehicle 90b passes over the road stud 10.

The length of the vehicle may then be calculated as $v(t_R-t_F)$. If the front and rear vehicle lights are detected by different sensors which are spaced apart on the road stud, then this distance apart can to be subtracted from the calculated length of the vehicle for a more accurate determination of vehicle length if required.

Based upon the calculated vehicle length, it is possible to infer the type of vehicle. Such information may be logged by the road stud, or passed off-road for logging.

(e) Method of road stud power reduction by distributed sensing and processing

When communications are established between road studs, any sensing functions can be combined between groups of studs, thereby sharing the power requirements for the whole site. The time between each microprocessor 30 taking measurements can also be extended, thereby saving power. In addition, if one road stud 10 is found to be particularly low on power, whilst surrounding road studs have a good power supply, then the low-power road stud could be put into an "emergency" state so as to perform only essential processing and light emission.

Detection of rain and fog

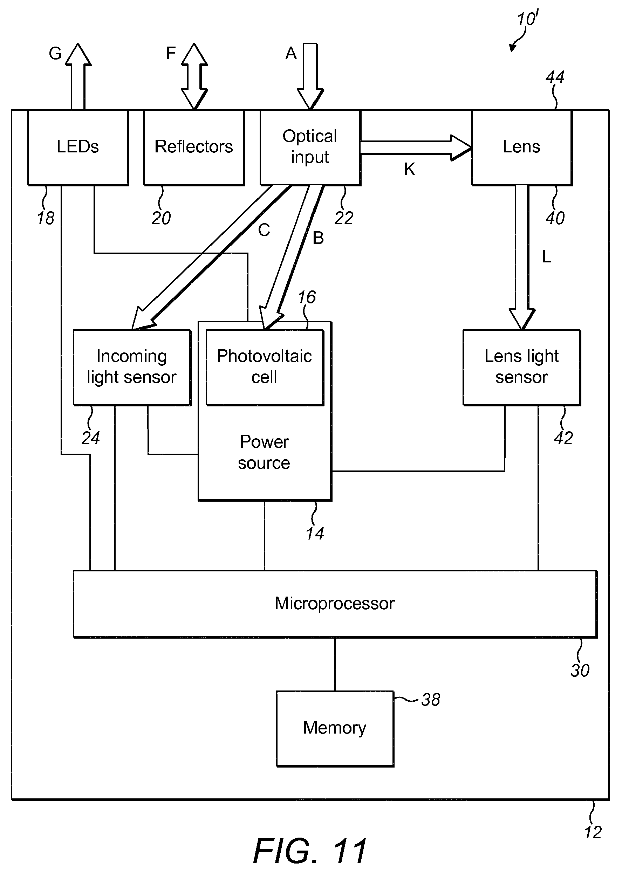

The road stud described herein may also comprise a lens which is not shown in Figure 1 for simplicity. Instead, Figure 11 shows a road stud 10' including the lens 40 and an associated lens light sensor 42, but excluding the elements of the road stud communication system (i.e. the reflector 26, the piezoelectric element 28, the optical communication output 32, the optical communication input 34, and the optical communication light sensor 36). However, it will be appreciated that a road stud 10 or 10' could comprise the lens 40 and the associated lens light sensor 42 in addition to the elements of the road stud communication system.

As mentioned previously, the optical input 22 directs incoming light (see arrow A) towards the light sensor 24 (see arrow C), the photovoltaic cell 16 (see arrow B) and/or the reflector 26 (see arrow D). In addition, the optical input 22 may be arranged to receive incoming light (see arrow A) from a vehicle on the road surface and to direct at least some of the incoming light towards the lens 40 (see arrow K).

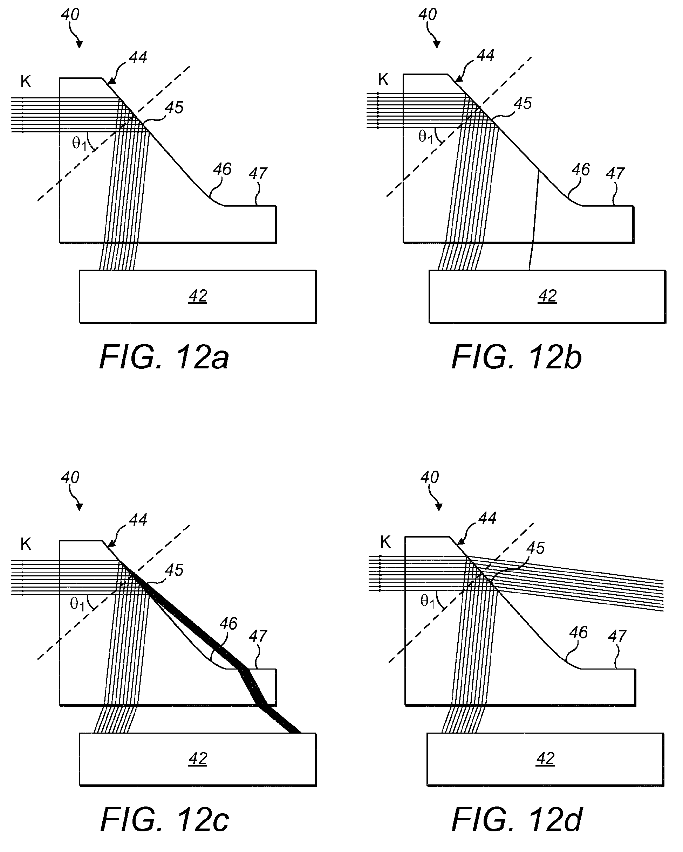

The lens 40 has a lens surface 44 which defines an interface between the lens 40 and an external environment of the road stud 10' (i.e. the air/atmosphere outside the road stud). The geometry of the lens surface 44 is shown in Figure 12. The lens surface 44 comprises a first flat portion 45, a curved portion 46 and a second flat portion 47. The curved portion 46 is slightly concave and is disposed between the first and second flat portions 45 and 47. The first and second flat portions 45 and 47 are angled with respect to each other.

The light from the optical input 22 is arranged to pass through the lens 40 along a predetermined path so as to meet the lens surface 44 at the first flat portion 45. The predetermined path is arranged at a predetermined angle $\theta_1$ to the normal to the first flat portion 45 of the lens surface 44. The incoming light along the predetermined path is reflected and/or refracted at the lens surface 44. The lens light sensor 42 is disposed to sense reflected and/or refracted light from the lens surface 44. The lens light sensor 42 is powered by the power source 14 if necessary. The lens light sensor 42 outputs sensed light data to the microprocessor 30.

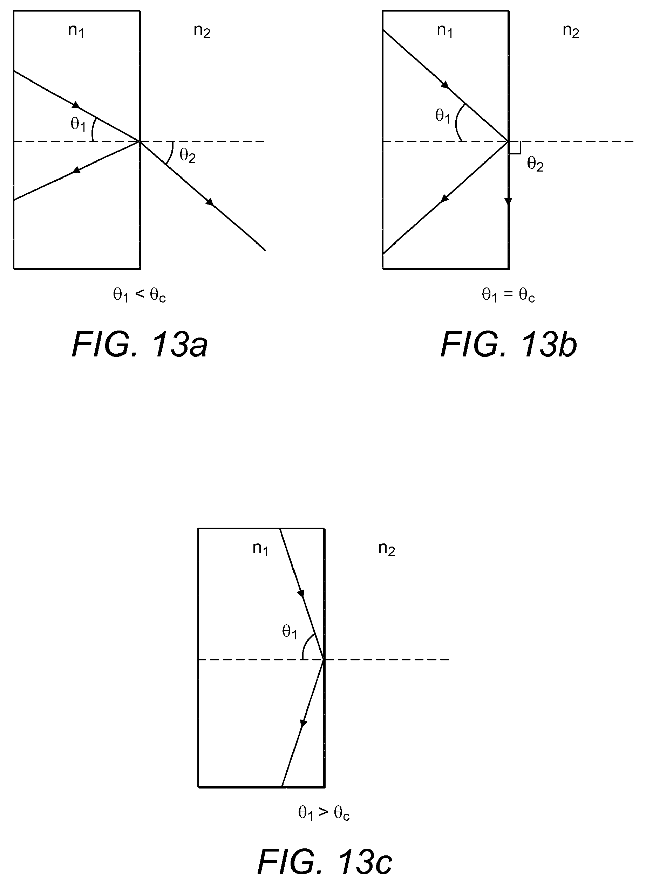

Consider a surface (e.g. the lens surface 44) which marks a boundary between two areas of different refractive index. Snell's law states that $n_1 \sin\theta_1 = n_2 \sin\theta_2$, where $\theta_1$ is the angle of the incident ray with respect of the normal at the surface, $\theta_2$ is the angle of the refracted (i.e. transmitted) ray with respect to the normal at the surface, $n_1$ is the refractive index of the medium through which the incident ray passes, and $n_2$ is the refractive index of the medium through which the refracted ray passes. Consider $n_1 > n_2$ (as for the light ray approaching the lens surface 44 along the predetermined path). The so-called "critical angle" $\theta_c$ is the angle of incidence $\theta_1$ for which the refracted ray is parallel to the surface (i.e. $\theta_2 = 90°$) so $\theta_c = \sin^{-1}(n_2/n_1)$. This situation is shown in Figure 13b. Figure 13a shows the reflected and refracted light rays when $\theta_1 < \theta_c$, and Figure 13c shows total internal reflection (TIR) which occurs when $\theta_1 > \theta_c$.

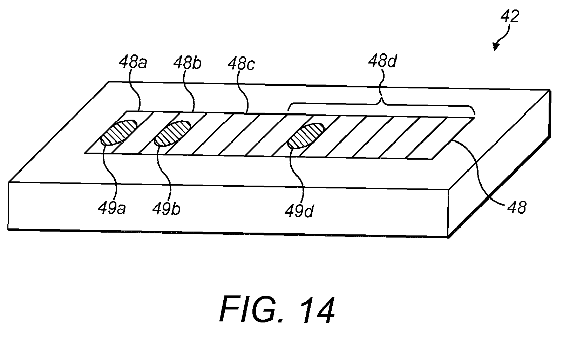

Figure 14 shows an example of a lens light sensor 42 having a detection region 48 made up from a plurality of detection areas 48a, 48b, 48c and 48d. Thus, the lens light sensor 42 is able to distinguish between light detected in detection area 48b and light detected in detection area 48c, for example. Thus, the sensed light data from the lens light sensor 42 includes information about the location of the sensed light. A first detection area 48a is a control detection area arranged to receive a portion of the incoming light so as to normalise any reflected/refracted light measurements. A second detection area 48b is arranged to receive light reflected from the lens surface 44. A third detection area 48c is arranged to receive light which has been refracted along the lens surface 44 when $\theta_1 = \theta_c$. A fourth detection area 48d includes a number of discrete detection areas arranged to receive light refracted into the external environment by the lens surface 44. The discrete detection areas enable the angle of refraction to be inferred. In Figure 14, an example is shown whereby three separate light signals 49a, 49b and 49d have been detected by the lens light sensor 42.

Reflections from an inner face (not shown) of the lens 40 may be used as the control (i.e. reference) to indicate the amount of light being input into the lens 40. These "control" reflections may be directed towards the control detection area 48a of the lens light sensor 42 and then used to normalise any detected reflected/refracted light. Alternatively, the incoming light sensor 24 may be used as a control to indicate the amount of incoming light for normalisation purposes.

If the angle of incidence $\theta_1$ is set up appropriately, and the refractive index $n_2$ of the external environment is sufficiently low, there will be total internal reflection (as shown in Figure 12a). This will result in a large amount of reflected light being detected by the reflection detection area 48b of the lens light sensor 42. There should be no light detected by the critical detection area 48c or by the refraction detection areas 48d.

For the same angle of incidence $\theta_1$, if the refractive index $n_2$ of the external environment is somewhat higher, the "critical angle" situation shown in Figure 12B may occur. In this case, some light will be refracted along the first flat portion 45 of the lens surface 44 until it reaches the curved portion 46 of the lens surface 44. At this point, the refracted ray will be diverted back into the lens 40 by the curved portion 46 of the lens surface 44. This will result in a reduced amount of reflected light being detected by the reflection detection area 48b of the lens light sensor 42 since some of the light will have been transmitted (i.e. refracted) rather than reflected. In addition, the refracted light beam will be detected by the critical detection area 48c of the lens light sensor 42.

For the same angle of incidence $\theta_1$, if the refractive index $n_2$ of the external environment is increased again, some of the light will be refracted into the external environment as shown in Figure 12c. The lens surface 44 of the lens 40 is designed such that the refracted light will be directed towards the second flat portion 47 of the lens 40 so as to re-enter the lens 40. Again, a reduced amount of reflected light will be detected by the reflection detection area 48b of the lens light sensor 42 since some of the light will have been transmitted (i.e. refracted) rather than reflected. In addition, the refracted light beam will be detected by the one or more of the refraction detection areas 48d of the lens light sensor 42. This is the exemplary situation shown by the detected light 49 in Figure 14.

For the same angle of incidence $\theta_1$, if the refractive index $n_2$ of the external environment is increased yet again, the angle $\theta_2$, of the refracted beam to the normal to the first flat portion of the lens surface 44 is reduced such that the refracted beam no longer meets the second flat portion 47 of the lens surface 44. This situation is shown in Figure 12d. Again, a reduced amount of reflected light will be detected by the reflection detection area 48b of the lens light sensor 42 since some of the light will have been transmitted (i.e. refracted) rather than reflected. The refracted light beam will no longer be detected by the refraction detection areas 48d of the lens light sensor 42 since the light has not been refracted through a sufficiently large angle to be directed towards the lens light sensor 42.

Hence, based on the amount and spatial distribution of light detected by the lens light sensor 42, the road stud 10' provides information about the refractive index $n_2$ of the external environment. Since the refractive index $n_2$ of the external environment will increase with the moisture content of the atmosphere, this refractive index information can be used to infer information about the moisture content of the external environment. For example, if there is a lot of detected reflected light, then there is TIR, so $n_2$ is relatively low, so the moisture content of external environment/atmosphere is relative low. In contrast, if there is less reflected light, then there is partial transmission through the lens surface 44, so $n_2$ is higher, so the moisture content of external environment/atmosphere is higher. Thus, the lens 40 and associated lens light sensor potentially make it possible to detect rain and/or fog using the road stud 10'.

The angle of incidence $\theta_1$ should be chosen to ensure that there is total internal reflection when there is no moisture in the atmosphere. However, in this no-moisture situation, the angle of incidence should be relatively close to the critical angle $\theta_c$ such that there is a significant change in the amount of reflected light as the moisture content of the atmosphere increases. The angle of incidence $\theta_1$ may be chosen to be equal to the critical angle $\theta_c$ for a particular threshold level of refractive index of the external environment (e.g. the refractive index when fog is present). In this embodiment, the detector can be used to accurately detect binary "fog / no fog" conditions of the external atmosphere.

Thus, the above-described optical rain and fog detection method works on the refractive index of the lesser medium (in this case, air) changing with the density of water contained in the atmosphere. The measurement of this water content is taken from within the road stud and no external sensors are required to determine the result. The only power required to use the detection method is power for the microprocessor 30 and the lens light sensor 42. Thus, relatively little energy is used.

In order to ensure that the reflected and refracted light detected by the lens light sensor 42 may be differentiated from other possible light sources, the light approaching the lens surface 44 via the predetermined path may include a digital signal (which could be produced using the reflector 26 and piezoelectric element 28 as described above with respect to the road stud communication method).

Although preferred embodiments of the invention have been described, it is to be understood that these are by way of example only and that various modifications may be contemplated within the scope of the appended claims.

The present application discloses subject matter in accordance with the following numbered clauses:

Clause A1. A road stud for disposal in a road surface, the road stud comprising: an optical input for receiving incoming light from a vehicle on the road surface; an optical output for directing light out of the road stud in a predetermined output direction; a light modification component operable to modify incoming light as it passes along a light path from the optical input to the optical output; a microprocessor operable to control the light modification component, thereby enabling the road stud to send an outgoing optical communication signal in the predetermined output direction when the road stud is illuminated by incoming light from a vehicle.

Clause A2. The road stud of clause A1 wherein the light modification component is an interrupt component operable to alternately prevent and allow the passage of incoming light along the light path from the optical input to the optical output, thereby enabling the road stud to send a digital optical communication signal in the predetermined output direction.

Clause A3. The road stud of clause A2 wherein the interrupt component comprises a piezoelectric element coupled to an optical element disposed in the light path, the piezoelectric element being operable to move the optical element in response to electrical signals from the microprocessor, the optical element being moveable to alternately prevent and allow the passage of incoming light along the light path from the optical input to the optical output.

Clause A4. The road stud of any of clauses A1 to A3 wherein the road stud further comprises a light sensor arranged to sense an incoming optical communication signal.

Clause A5. The road stud of clause A4 wherein the road stud is arranged to receive the incoming optical communication signal from a predetermined input direction.

Clause A6. The road stud of clause A5 wherein the predetermined input direction is substantially coincident with the predetermined output direction.

Clause A7. The road stud of any of clauses A1 to A6 wherein the road stud comprises a plurality of optical inputs for receiving incoming light from vehicles on the road surface.

Clause A8. The road stud of any of clauses A1 to A7 wherein the road stud comprises a plurality of optical outputs for directing light out of the road stud in a plurality of respective predetermined output directions.

Clause A9. A road stud for disposal in a road surface, the road stud comprising: a light sensor operable to sense incoming light from a vehicle on the road surface and to output associated sensed light data; and a microprocessor operable to analyse the sensed light data, thereby enabling the detection of vehicles with their lights on.

Clause A10. The road stud of clause A9 further comprising a light source arranged to emit light from the road stud, wherein the microprocessor is operable to reduce the power drawn by the light source when no vehicles with their lights on have been detected for a predetermined period of time.

Clause A11. The road stud of clause A10 wherein the microprocessor is operable to reduce the power drawn by the light source by reducing the intensity of light emitted by the light source.

Clause A12. The road stud of clause A10 or clause A11 wherein the microprocessor is operable to reduce the power drawn by the light source by reducing the frequency of light emitted by the light source.

Clause A13. The road stud of any of clauses A9 to A12 wherein the microprocessor is operable to detect a vehicle with its lights on when the sensed light data comprises a high-frequency oscillating signal.

Clause A14. A road stud for disposal in a road surface, the road stud comprising: a reflector for reflecting incoming light from a vehicle on the road surface; a light source arranged to emit light from the road stud; a light sensor for sensing light so as to provide sensed light data; a microprocessor operable to adjust the light emitted by the light source based on the sensed light data so as to control a property of the combined reflected and emitted outgoing light from the road stud.

Clause A15. The road stud of clause A14 wherein: the light sensor is arranged to sense a light colour; the light source is a colour-variable light source; and the microprocessor is operable to adjust the colour of light emitted by the colour-variable light source based on the sensed light colour so as to control the colour of the combined reflected and emitted outgoing light from the road stud.

Clause A16. The road stud of clause A14 or clause A15 wherein: the light sensor is arranged to sense an amount of incoming light from a vehicle on the road surface; and the microprocessor is operable to adjust the amount of light emitted by the light source based on the sensed amount of incoming light so as to control the amount of the combined reflected and emitted outgoing light from the road stud.

Clause A17. A road stud for disposal in a road surface, the road stud comprising: a lens having a surface which defines an interface between the lens and an external environment of the road stud; an optical input arranged to receive incoming light from a vehicle on the road surface, the optical input being arranged to direct the incoming light through the lens along a predetermined path towards the lens surface so as to be reflected and/or refracted by the lens surface; and a light sensor arranged to sense light which has been reflected and/or refracted by the lens surface, the light sensor being operable to output sensed light data so as to provide information about the refractive index of the external environment, thereby enabling inference of information about the moisture content of the external environment.

Clause A18. The road stud of clause A17 wherein the sensed light data includes information about the location of the sensed light.

Clause A19. The road stud of clause A17 or clause A18 wherein the light sensor is arranged to sense light which has been reflected by the lens surface, and wherein the predetermined path is at a predetermined angle $(\theta_1)$ to the normal to the lens surface, the predetermined angle being equal to the critical angle $(\theta_c)$ for a chosen threshold level of refractive index of the external environment.

Clause A20. The road stud of any of clauses A17 to A19 wherein the lens surface comprises a curved portion spaced from the predetermined path, the curved portion being arranged such that incoming light refracted along the lens surface is deflected by the curved portion so as to be sensed by the light sensor.

Clause A21. The road stud of any of clauses A17 to A20 further comprising a lens portion arranged to receive incoming light refracted into the external environment by the lens surface, the lens portion being arranged such that received refracted light is deflected by the lens portion so as to be sensed by the light sensor.

Clause A22. The road stud of clause A21 wherein the lens portion forms part of the lens.

Clause A23. The road stud of any of clauses A17 to A22 further comprising a microprocessor operable to analyse the sensed light data so as to provide information about the refractive index of the environment external to the road stud and so as to infer information about the moisture content of the atmosphere external to the road stud.

Clause A24. The road stud of any of clauses A17 to A23 further comprising an incoming light sensor arranged to sense incoming light directed along the predetermined path and to output sensed incoming light data.

Clause A25. The road stud of clause A24 when dependent on clause A23 wherein the microprocessor is operable to analyse both the sensed light data and the sensed incoming light data so as to provide information about the refractive index of the environment external to the road stud and so as to infer information about the moisture content of the atmosphere external to the road stud.

Clause A26. A road stud for disposal in a road surface, the road stud comprising: a first corner cube reflector comprising three mutually perpendicular flat surfaces arranged to reflect incoming light back in the incoming light direction, the surfaces being reflective on both sides; and a second corner cube reflector comprising three mutually perpendicular flat surfaces, the second corner cube reflector comprising an aperture at the corner intersection of the three surfaces; wherein the first corner cube reflector is smaller than the second corner cube reflector; and wherein the first corner cube reflector is disposed within the second corner cube reflector, spaced in front of the aperture of the second corner cube reflector such that part of the incoming light is reflected back in the incoming light direction and the remainder of the incoming light is reflected between the first and second corner cube reflectors until it passes through the aperture of the second corner cube reflector.

Clause A27. The road stud of clause A26 further comprising a light source arranged to emit light through the aperture of the second corner cube reflector.

Clause A28. The road stud of clause A26 or A27 further comprising a photovoltaic cell arranged to be charged by light passing through the aperture of the second corner cube reflector.

Clause A29. The road stud of any of clauses A26 to A28 further comprising a light sensor arranged to sense light passing through the aperture of the second corner cube reflector.

Clause A30. A road stud for disposal substantially flush with a road surface, the road stud comprising a reflector arranged to reflect incoming light back in the incoming light direction, the reflector comprising a biconvex lens having first and second convex surfaces, the first convex surface of the lens being arranged to receive incoming light from a vehicle on the road surface and to focus the incoming light towards the second convex surface of the lens, the second convex surface being arranged to reflect the incoming light back towards the first convex surface and back out through the lens in the incoming light direction.

Clause A31. The road stud of clause A30 wherein the second convex surface of the lens comprises a reflective coating.

Clause A32. The road stud of any of clauses A4 to A6, A9 to A25, and A29 wherein the light sensor comprises one of a photodiode, a phototransistor, a photoresistor, and a solar/photovoltaic cell.

Clause A33. The road stud of any of clauses A10 to A12, A14 to A16, and 27 wherein the light source comprises one or more light emitting diodes.

Clause A34. The road stud of any of clauses A1 to A33 further comprising a power supply.

Clause A35. The road stud of any of clauses A1 to A34 further comprising a data storage device.

**Claims**

1. A road stud for disposal in a road surface, the road stud comprising:

   a light sensor operable to sense incoming light from a vehicle on the road surface and to output associated sensed light data;
   a microprocessor operable to analyse the sensed light data, thereby enabling the detection of vehicles with their lights on; and
   a light source arranged to emit light from the road stud, wherein the microprocessor is operable to reduce the power drawn by the light source when no vehicles with their lights on have been detected for a predetermined period of time.

2. The road stud of claim 1 wherein the microprocessor is operable to reduce the power drawn by the light source by reducing the intensity of light emitted by the light source.

3. The road stud of claim 1 or claim 2 wherein the microprocessor is operable to reduce the power drawn by the light source by reducing the frequency of light emitted by the light source.

4. The road stud of any preceding claim wherein the reduction in power drawn by the light source is not perceivable by the human eye.

5. The road stud of any preceding claim wherein the microprocessor is operable to detect a vehicle with its lights on when the sensed light data comprises a high-frequency oscillating signal.

6. A road stud for disposal in a road surface, the road stud comprising:

   a reflector for reflecting incoming light from a vehicle on the road surface;
   a light source arranged to emit light from the road stud;
   a light sensor for sensing light so as to provide sensed light data;
   a microprocessor operable to adjust the light emitted by the light source based on the sensed light data so as to control a property of the combined reflected and emitted outgoing light from the road stud.

**7.** The road stud of claim 6 wherein:

the light sensor is arranged to sense a light colour;
the light source is a colour-variable light source; and
the microprocessor is operable to adjust the colour of light emitted by the colour-variable light source based on the sensed light colour so as to control the colour of the combined reflected and emitted outgoing light from the road stud.

**8.** The road stud of claim 6 or claim 7 wherein:

the light sensor is arranged to sense an amount of incoming light from a vehicle on the road surface; and
the microprocessor is operable to adjust the amount of light emitted by the light source based on the sensed amount of incoming light so as to control the amount of the combined reflected and emitted outgoing light from the road stud.

**9.** A road stud for disposal in a road surface, the road stud comprising:

a lens having a surface which defines an interface between the lens and an external environment of the road stud;
an optical input arranged to receive incoming light from a vehicle on the road surface, the optical input being arranged to direct the incoming light through the lens along a predetermined path towards the lens surface so as to be reflected and/or refracted by the lens surface; and
a lens portion arranged to receive incoming light refracted into the external environment by the lens surface; and
a light sensor arranged to sense light which has been reflected and/or refracted by the lens surface, and the lens portion being arranged such that received refracted light is deflected by the lens portion so as to be sensed by the light sensor; and
the light sensor being operable to output sensed light data so as to provide information about the refractive index of the external environment, thereby enabling inference of information about the moisture content of the external environment.

**10.** The road stud of claim 9 wherein the sensed light data includes information about the location of the sensed light.

**11.** The road stud of claim 9 or claim 10 wherein the light sensor is arranged to sense light which has been reflected by the lens surface, and wherein the predetermined path is at a predetermined angle ($\theta_1$) to the normal to the lens surface, the predetermined angle being equal to the critical angle ($\theta_c$) for a chosen threshold level of refractive index of the external environment.

**12.** The road stud of any of claims 9 to 11 wherein the lens surface comprises a curved portion spaced from the predetermined path, the curved portion being arranged such that incoming light refracted along the lens surface is deflected by the curved portion so as to be sensed by the light sensor.

**13.** The road stud of any of claims 9 to 12 wherein the lens portion forms part of the lens.

**14.** The road stud of any of claims 9 to 13 further comprising a microprocessor operable to analyse the sensed light data so as to provide information about the refractive index of the environment external to the road stud and so as to infer information about the moisture content of the atmosphere external to the road stud.

**15.** The road stud of any of claims 9 to 14 further comprising an incoming light sensor arranged to sense incoming light directed along the predetermined path and to output sensed incoming light data.

**16.** The road stud of claim 15 when dependent on claim 14 wherein the microprocessor is operable to analyse both the sensed light data and the sensed incoming light data so as to provide information about the refractive index of the environment external to the road stud and so as to infer information about the moisture content of the atmosphere external to the road stud.

FIG. 1

FIG. 2

FIG. 3

*80*

*82*

*86*

*84*

FIG. 4

*18ᴵ*

*26a*

*26b*

Aᴵ

Gᴵ

Eᴵ

Gᴵ

FIG. 5

FIG. 6

FIG. 7a

FIG. 7b

FIG. 8

FIG. 9

FIG. 10a

FIG. 10b

*FIG. 11*

FIG. 12a

FIG. 12b

FIG. 12c

FIG. 12d

$\theta_1 < \theta_c$

FIG. 13a

$\theta_1 = \theta_c$

FIG. 13b

$\theta_1 > \theta_c$

FIG. 13c

FIG. 14